# EUROPEAN PATENT APPLICATION

(11) **EP 3 970 961 A1**
(43) Date of publication of application: **23.03.2022**
(21) Application number: 20827908.3
(22) Date of filing: 08.06.2020
(51) Int. Cl.: B32B 5/02, B32B 27/04, B32B 27/12, B32B 27/24, B32B 27/38, C08J 5/24

(54) **FIBER-REINFORCED EPOXY RESIN COMPOSITE SHEET, FIBER-REINFORCED COMPOSITE PLATE AND FIBER-REINFORCED MOLDED ARTICLE, AND METHOD FOR PRODUCING SAME**

(30) Priority: 20.06.2019 JP 2019114358
(71) Applicant: Fukuvi Chemical Industry Co., Ltd., Fukui-shi, Fukui 918-8585 (JP); Mitsubishi Chemical Corporation, Tokyo 100-8251 (JP)
(72) Inventor: TAJIMA, Munetake, Fukui-shi, Fukui 918-8585 (JP); KANAMORI, Naoaki, Fukui-shi, Fukui 918-8585 (JP); USHIYAMA, Hisaya, Tokyo 100-8251 (JP); WATANABE, Yusuke, Tokyo 100-8251 (JP)
(74) Representative: Müller-Boré & Partner Patentanwälte PartG mbB
(86) International application number: PCT/JP2020/022511
(87) International publication number: WO 2020/255775

(57) **Abstract**

The present invention relates to a fiber-reinforced epoxy resin composite sheet comprising an epoxy resin film and reinforcing fibers laminated on one or both surfaces of the epoxy resin film, wherein in the reinforcing fibers, opened fibers are oriented in a predetermined direction, and a volume content Vf of the reinforcing fiber is 5 to 70%.

## Description

### Technical Field

The present invention relates to a fiber-reinforced epoxy resin composite sheet, a fiber-reinforced composite plate, and a fiber-reinforced molded article, and a method for producing same. These are suitably used for sports and leisure applications, general industrial applications, aircraft material applications, and other applications.

### Background Art

A fiber-reinforced resin composite material is used in wide variety of fields ranging from sports and leisure applications to industrial applications such as automobiles and aircrafts because of its light weight, high strength and high rigidity. As a method for producing such a fiber-reinforced resin composite material, there is a method using an intermediate material, namely a prepreg in which a reinforcing material formed of long fibers (continuous fibers) such as reinforcing fibers, is impregnated with a matrix resin. This method has advantages that the content of the reinforcing fibers in the fiber-reinforced resin composite material to be obtained can be easily managed, and the content of the reinforcing fibers can be set to be high. A molded article of the fiber-reinforced resin composite material can be obtained by laminating a plurality of the prepregs and heat-curing the laminated prepregs.

Conventionally, carbon fibers excellent in specific strength and specific modulus are often used as reinforcing fibers for meeting the needs for weight reduction, and thermosetting epoxy resins excellent in adhesiveness with carbon fibers are often used as a matrix resin.

However, since thermosetting epoxy resins generally tend to become brittle when cured and have low impact resistance. Thus, when a thermosetting epoxy resin is used, there is an issue that is improving the impact resistance of the fiber-reinforced resin composite material.

When a molded article is produced from a fiber-reinforced resin composite sheet using a thermosetting epoxy resin, the molded article is cured for a long time under high temperature and high pressure using an autoclave, and therefore, a molded article having high strength can be obtained. However, this production method has problems that a molding time is long and productivity is low. In addition, the size of the molded article that can be produced is limited by the size of the autoclave. Therefore, such a production method using an autoclave is suitable for production of a fiber-reinforced resin composite sheet with high added value, but is unsuitable for mass production of general-purpose products (see Patent Literature 1).

On the other hand, in general, since a thermoplastic resin composite material can be molded in a shorter time than a thermosetting resin composite material, it can contribute to high productivity and cost reduction.

### Citation List

### Patent Literature

Patent Literature 1: JP H08-118381 A

### Summary of Invention

In the technique of Patent Literature 1, since an autoclave is used, the size of a molded product is limited, and the molding time is long, so that there is a problem that productivity is low and cost is high.

The present invention has been made in view of the above circumstances, and an object thereof is to provide a fiber-reinforced epoxy resin composite sheet excellent in molding processability.

The present inventors have studied from various angles to achieve the above object. As a result, the present inventors have found that the above object can be achieved by an epoxy resin film and opened reinforcing fibers laminated on one or both surfaces of the epoxy resin film and oriented in a predetermined direction, and have completed the present invention.

That is, a fiber-reinforced epoxy resin composite sheet according to a first aspect of the present invention is a fiber-reinforced epoxy resin composite sheet comprising an epoxy resin film and reinforcing fibers laminated on one or both surfaces of the epoxy resin film, wherein in the reinforcing fibers, opened fibers are oriented in a predetermined direction, and a volume content Vf of the reinforcing fiber is 5 to 70%.

### Brief Description of Drawings

FIG. 1 is a schematic view showing a configuration example of an apparatus used for producing a fiber-reinforced epoxy resin composite sheet of the present embodiment.
FIG. 2 is a schematic view showing a test sample used for evaluating aluminum adhesive strength in Example.

### Description of Embodiments

A fiber-reinforced epoxy resin composite sheet in the present embodiment is a fiber-reinforced epoxy resin composite sheet comprising an epoxy resin film and reinforcing fibers laminated on one or both surfaces of the epoxy resin film, wherein in the reinforcing fibers, opened fibers are oriented in a predetermined direction, and a volume content Vf of the reinforcing fiber is 5 to 70%. The fiber-reinforced epoxy resin composite sheet of the present embodiment is excellent in molding processability and the like.

Each material used in the fiber-reinforced epoxy resin composite sheet in the present embodiment will be described. In the present specification, the "epoxy resin composition" means a resin composition containing an epoxy resin and a solvent, and optionally a curing agent, a curing accelerator, a thermoplastic resin other than the epoxy resin, an additive, and the like. In the present specification, the "solid content" means a component excluding a solvent, and includes not only a solid epoxy resin but also a semi-solid or viscous liquid component.

The epoxy resin used in the fiber-reinforced epoxy resin composite sheet in the present embodiment means a compound having two or more epoxy groups in one molecule. The weight average molecular weight (Mw) of the epoxy resin is a value measured in terms of polystyrene by gel permeation chromatography. An "epoxy equivalent weight" of the epoxy resin is defined as "the mass of an epoxy resin containing 1 equivalent of epoxy groups", and can be measured in accordance with JIS K 7236: 2001.

The fiber-reinforced epoxy resin composite sheet in the present embodiment can be produced using an epoxy resin composition containing an epoxy resin.

As the epoxy resin, a thermosetting epoxy resin and a thermoplastic epoxy resin are generally used. In the fiber-reinforced epoxy resin composite sheet in the present embodiment, it is desirable to use a thermosetting epoxy. However, the epoxy resin in the present embodiment may be molded and processed without using a curing agent.

Epoxy resins are typically representative resins of thermosetting resins. The thermosetting epoxy resin has a relatively low molecular weight. On the other hand, the thermoplastic epoxy resin used in the fiber-reinforced epoxy resin composite sheet in the present embodiment preferably has a high molecular weight.

Although the epoxy resin composition used in the fiber-reinforced epoxy resin composite sheet in the present embodiment may contain a curing agent, when the epoxy resin composition does not contain the curing agent, the epoxy resin composition can be heat-molded many times. The epoxy resin in the present embodiment can be stored at normal temperature even if the curing agent is contained, and thus handling properties are good. In addition, since the epoxy resin can be molded by press molding, the epoxy resin can be molded with a processing time that cannot be achieved by a conventional epoxy resin. As a result, the epoxy resin is optimal for production of a fiber-reinforced epoxy resin composite sheet with high added value, and can contribute to mass production of general-purpose products.

The epoxy resin is not particularly limited, and a known epoxy resin can be used. Such an epoxy resin is preferably an epoxy resin having a weight average molecular weight of 1500 or more. Alternatively, the epoxy resin may be a mixture of an epoxy resin having a weight average molecular weight of 1500 or more and an epoxy resin having a weight average molecular weight of less than 1500.

The content of the epoxy resin in the epoxy resin composition is preferably 25% by mass or more, and more preferably 30% by mass or more. Furthermore, the content of the epoxy resin in the epoxy resin composition is preferably 85% by mass or less, and more preferably 80% by mass or less. Although the content of the epoxy resin depends on a viscosity of the epoxy resin, the type of a solvent, the content of a curing agent contained as necessary, and the like, if the content of the epoxy resin is equal to or more than the above lower limit, the solvent is easily volatilized when the epoxy resin composition is formed into a film, which is preferable. In addition, if the content of the epoxy resin is equal to or less than the above upper limit, handling is easy when the epoxy resin composition is formed into a film, which is preferable.

### (Epoxy resin having weight average molecular weight of 1500 or more)

By using an epoxy resin having a weight average molecular weight of 1500 or more as the epoxy resin, a fiber-reinforced epoxy resin composite sheet having excellent impact resistance can be obtained.

As the epoxy resin, the epoxy resin having a weight average molecular weight of 1500 or more and an epoxy resin having a weight average molecular weight of less than 1500 may be used in combination. In this case, a ratio of the epoxy resin having a weight average molecular weight of 1500 or more to 100 parts by mass of the total epoxy resin is preferably 60 parts by mass or more, more preferably 65 parts by mass or more, still more preferably 70 parts by mass or more, and even more preferably 90 parts by mass or more, and the upper limit thereof is preferably 100 parts by mass. When the ratio of the epoxy resin having a weight average molecular weight of 1500 or more is equal to or more than the above lower limit, a fiber-reinforced epoxy resin composite sheet excellent in impact resistance tends to be obtained.

In addition, when more of the epoxy resin is composed of the epoxy resin having a weight average molecular weight of 1500 or more, easy film formation and more excellent impact resistance can be realized. When the weight average molecular weight of the epoxy resin is 100,000 or less, the resin can have a preferable viscosity that is not excessively high, so that handling of the resin can be facilitated.

As described above, from the viewpoint of film formation, impact resistance, and resin handling, the weight average molecular weight of the epoxy resin having a weight average molecular weight of 1500 or more is preferably 2000 or more. Furthermore, the weight average molecular weight of the epoxy resin having a weight average molecular weight of 1500 or more is preferably 100,000 or less, and more preferably 80,000 or less.

The epoxy equivalent weight of the epoxy resin having a weight average molecular weight of 1500 or more is preferably 800 g/eq or more and 50,000 g/eq or less, and more preferably 850 g/eq or more and 40,000 g/eq or less. When the epoxy equivalent weight is equal to or more than the above lower limit, film formation becomes easier, and impact resistance is easily exhibited. When the epoxy equivalent weight is equal to or less than the above upper limit, handling of the resin becomes easier, which is preferable.

The epoxy resin having a weight average molecular weight of 1500 or more can be produced using a general method for producing a thermoplastic epoxy resin. For example, the epoxy resin can be obtained by combining a dihydric phenol compound having an aromatic structure and/or an alicyclic structure, preferably a dihydric phenol compound having an aromatic structure and an alicyclic structure, and a bifunctional epoxy resin in the presence of a catalyst and addition-reacting them under heat.

The dihydric phenol compound having an aromatic structure and an alicyclic structure is not particularly limited, and for example, 1,1-bis(4-hydroxyphenyl)cyclohexane, bis(4-hydroxyphenyl)-3,3,5-trimethylcyclohexane, and the like can be suitably used. These may be used alone or in combination of two or more. Among them, bis(4-hydroxyphenyl)-3,3,5-trimethylcyclohexane is particularly preferable. Purity of bis(4-hydroxyphenyl)-3,3,5-trimethylcyclohexane to be used is preferably 96% or more, and more preferably 98% or more. When the purity is 96% or more, it is possible to facilitate achievement of sufficient high molecular weight.

As a raw material dihydric phenol compound, a combination of the above-mentioned dihydric phenol compound having an aromatic structure and an alicyclic structure and another dihydric phenol compound may be used. The other dihydric phenol compound may be any compound as long as it is a compound in which two hydroxyl groups are bonded to an aromatic ring. Examples thereof include bisphenols such as bisphenol A, bisphenol F, bisphenol S, bisphenol B, and bisphenol AD, biphenol, catechol, resorcin, hydroquinone, and dihydroxynaphthalene. A compound in which these compounds are substituted with a non-interfering substituent such as an alkyl group, an aryl group, an ether group, or an ester group may be used. Among these dihydric phenol compounds, preferred are one or more compounds selected from bisphenol A, bisphenol F, bisphenol S, 4,4'-biphenol, and 3,3',5,5'-tetramethyl-4,4'-biphenol. These other dihydric phenol compounds may be used alone or in combination of two or more.

When these other dihydric phenol compounds are used in combination, the amount thereof used is preferably 30% by mass or less in the total dihydric phenol compound used as raw materials. That is, 70% by mass or more and 1 00% by mass or less of the raw material dihydric phenol compound is preferably a dihydric phenol compound having an aromatic structure and an alicyclic structure.

On the other hand, a raw material bifunctional epoxy resin may be any compound as long as it is a compound having two epoxy groups in the molecule. Examples thereof include bisphenol type epoxy resins such as bisphenol A type epoxy resins, bisphenol F type epoxy resins, and bisphenol S type epoxy resins; biphenol type epoxy resins; alicyclic epoxy resins; diglycidyl ethers of monocyclic dihydric phenols such as catechol, resorcin, and hydroquinone; diglycidyl ethers of dihydroxynaphthalene; diglycidyl ethers of dihydric alcohols; and diglycidyl esters of divalent carboxylic acids such as phthalic acid, isophthalic acid, tetrahydrophthalic acid, and hexahydrophthalic acid. In addition, a compound in which these compounds are substituted with a non-interfering substituent such as an alkyl group, an aryl group, an ether group, or an ester group may be used. These raw material bifunctional epoxy resins may be used alone or in combination of two or more.

An equivalent ratio during the reaction between the raw material bifunctional epoxy resin and the dihydric phenol compound is preferably epoxy group: phenolic hydroxyl group = 1: 0.90 to 1.10. When the equivalent ratio is within this range, it is possible to more reliably and sufficiently increase the molecular weight. Depending on reaction conditions and the like, when epoxy group: phenol hydroxyl group = 1: x < 1, that is, when a phenol hydroxyl group x per epoxy group is less than 1, a probability that a terminal becomes an epoxy group increases. In addition, when epoxy group: phenolic hydroxyl group = 1: x > 1, that is, when the phenol hydroxyl group x per epoxy group is more than 1, a probability that the terminal becomes a phenolic hydroxyl group increases.

As the epoxy resin having a weight average molecular weight of 1500 or more, a commercially available product may be used. Examples of the epoxy resin available as a commercially available product include, but are not limited to, jER 1055, jER 1004, jER 1007, jER 1009, jER 1010, jER 1256, jER 4250, jER 4275, jER 1256B40, jER 1255HX30, YX 8100BH30, YX 6954BH30, YX 7200B35, jER 4005P, jER 4007P, and jER 4010P (all are trade names and are manufactured by Mitsubishi Chemical Corporation.), EPICLON 3050, EPICLON 4050, EPICLON 7050, EPICLON HM-091, and EPICLON HM-101 (all are trade names and are manufactured by DIC Corporation), and YD-903N, YD-904, YD-907, YD-7910, YD-6020, YP-50, YP-50S, YP-70, ZX-1356-2, FX-316, YDF 2004, and YDF-2005RD (all are trade names and are manufactured by NIPPON STEEL & SUMIKIN Chemical & Material Co., Ltd.).

As the epoxy resin having a weight average molecular weight of 1500 or more, one of them may be used alone, or two or more thereof may be used in combination.

### (Epoxy resin having weight average molecular weight of less than 1500)

As the epoxy resin, an epoxy resin having a weight average molecular weight of less than 1500 may be used together with an epoxy resin having a weight average molecular weight of 1500 or more as long as the effect of the present invention is not impaired. By using an epoxy resin having a weight average molecular weight of less than 1500, preferably 1300 or less, the strength, modulus, heat resistance, and handleability of the resulting fiber-reinforced epoxy resin composite sheet can be improved.

The molecular weight of the epoxy resin having a weight average molecular weight of less than 1500 is preferably 200 or more, and more preferably 250 or more. When the molecular weight of the epoxy resin having a weight average molecular weight of less than 1500 is 200 or more, it is possible to prevent the epoxy resin from being easily volatilized, and as a result, a resin film can be suitably produced without repelling the epoxy resin on a surface of a release film or a surface of a release paper.

The epoxy equivalent weight of the epoxy resin having a weight average molecular weight of less than 1500 is preferably 90 g/eq or more and 800 g/eq or less, and more preferably 100 g/eq or more and 750 g/eq or less. When the epoxy equivalent weight is equal to or more than the above lower limit, the resin film can be more easily produced. When the epoxy equivalent weight is equal to or less than the above upper limit, the heat resistance, the strength, and the modulus can be improved while toughness is imparted to the resin film.

When the epoxy resin having a weight average molecular weight of 1500 or more and the epoxy resin having a weight average molecular weight of less than 1500 are used in combination as the epoxy resin, in order to effectively obtain the above-described effect by using the epoxy resin having a weight average molecular weight of 1500 or more, a ratio of the epoxy resin having a weight average molecular weight of less than 1500 to 100 parts by mass of the total epoxy resin is preferably 40 parts by mass or less, more preferably 35 parts by mass or less, still more preferably 30 parts by mass or less, and even more preferably 10 parts by mass or less. The lower limit value thereof is 0 parts by mass.

Although the epoxy resin having a weight average molecular weight of less than 1500 is not particularly limited, a bifunctional or higher functional epoxy resin is preferably used. Examples thereof include bisphenol type epoxy resins such as bisphenol A type epoxy resins, bisphenol F type epoxy resins, bisphenol AF type epoxy resins, bisphenol S type epoxy resins, bisphenol E type epoxy resins, bisphenol Z type epoxy resins, and bisphenol AD type epoxy resins; glycidyl amine type epoxy resins such as biphenyl type epoxy resins, naphthalene type epoxy resins, dicyclopentadiene type epoxy resins, phenol novolac type epoxy resins, cresol novolac type epoxy resins, trisphenol methane type epoxy resins, tetraglycidyl diaminodiphenylmethane resins, and triglycidyl aminophenol resins; glycidyl ether type epoxy resins other than those described above such as tetrakis(glycidyloxyphenyl)ethane and tris(glycidyloxy)methane; epoxy resins obtained by modifying these resins; phenol aralkyl type epoxy resins; and alicyclic epoxy resins.

More preferably, a tri- or higher functional epoxy resin is used because more excellent strength, modulus, and heat resistance can be obtained. For example, a para type or meta type triglycidylaminophenol type epoxy resin, a tetraglycidyldiaminodiphenylmethane type epoxy resin, a phenol novolac type epoxy resin, or a cresol novolac type epoxy resin is preferably used.

Examples of commercially available products of the epoxy resin having a weight average molecular weight of less than 1500 include, but are not limited to, jER 825 (epoxy equivalent weight: 175 g/eq), jER 827 (epoxy equivalent weight: 185 g/eq), jER 828 (epoxy equivalent weight: 189 g/eq), jER 834 (epoxy equivalent weight: 250 g/eq), jER 806 (epoxy equivalent weight: 165 g/eq), jER 807 (epoxy equivalent weight: 170 g/eq), jER 604 (epoxy equivalent weight: 120 g/eq), jER 630 (epoxy equivalent weight: 98 g/eq), jER 1032H60 (epoxy equivalent weight: 169 g/eq), jER 152 (epoxy equivalent weight: 175 g/eq), jER 154 (epoxy equivalent weight: 178 g/eq), jER 157S70 (epoxy equivalent weight: 210 g/eq), YX-7700 (epoxy equivalent weight: 273 g/eq), YX-8000 (epoxy equivalent weight: 205 g/eq), YX-8800 (epoxy equivalent weight: 179 g/eq), YX-4000 (epoxy equivalent weight: 186 g/eq), YX-7105 (epoxy equivalent weight: 480 g/eq) and YX-7400 (epoxy equivalent weight: 440 g/eq) (all are trade names and are manufactured by Mitsubishi Chemical Corporation.), YD-127 (epoxy equivalent weight: 185 g/eq), YD-128 (epoxy equivalent weight: 189 g/eq), YDF-170 (epoxy equivalent weight: 170 g/eq), YDPN-638 (epoxy equivalent weight: 180 g/eq) and TX-0911 (epoxy equivalent weight: 172 g/eq) (all are trade names and are manufactured by NIPPON STEEL & SUMIKIN Chemical & Material Co., Ltd.), EPICLON 840 (epoxy equivalent weight: 185 g/eq), EPICLON 850 (epoxy equivalent weight: 189 g/eq), EPICLON 830 (epoxy equivalent weight: 170 g/eq), EPICLON 835 (epoxy equivalent weight: 172 g/eq), HP-4032 (epoxy equivalent weight: 150 g/eq), HP-4700 (epoxy equivalent weight: 162 g/eq), HP-4770 (epoxy equivalent weight: 204 g/eq), HP-4750 (epoxy equivalent weight: 185 g/eq), HP-7200 (epoxy equivalent weight: 265 g/eq), N-730A (epoxy equivalent weight: 174 g/eq), N-740 (epoxy equivalent weight: 181 g/eq), N-770 (epoxy equivalent weight: 187 g/eq) and TSR-400 (epoxy equivalent weight: 338 g/eq) (all are trade names and are manufactured by DIC Corporation), GAN (epoxy equivalent weight: 125 g/eq), GOT (epoxy equivalent weight: 135 g/eq), NC-2000 (epoxy equivalent weight: 241 g/eq) and NC-3000 (epoxy equivalent weight: 275 g/eq) (all are trade names and are manufactured by Nippon Kayaku Co., Ltd.), MY-0500 (epoxy equivalent weight: 110 g/eq), MY-0600 (epoxy equivalent weight: 106 g/eq) and ECN-1299 (epoxy equivalent weight: 230 g/eq) (all are trade names and are manufactured by Huntsman), and D.E.R 331, D.E.R 354 (epoxy equivalent weight: 170 g/eq) (epoxy equivalent weight: 187 g/eq) and D.E.R 332 (epoxy equivalent weight: 173 g/eq) (all are trade names and are manufactured by Dow Chemical Co).

As the epoxy resin having a weight average molecular weight of less than 1500, one of them may be used alone, or two or more thereof may be used in combination.

### (Curing agent)

The epoxy resin composition in the present invention may contain a curing agent. The curing agent is used for imparting strength, modulus, heat resistance, adhesiveness to reinforcing fibers, and the like.

The curing agent used in the present invention is not particularly limited. For example, dicyandiamide, ureas, imidazoles, aromatic amines, other amine curing agents, acid anhydrides, boron chloride amine complexes, phenols, organic phosphine compounds, benzoxazines, and the like can be used.

Dicyandiamide has a high melting point, and compatibility with an epoxy resin is suppressed in a low temperature range. Thus, when dicyandiamide is used as a curing agent, an epoxy resin composition having an excellent pot life tends to be obtained, which is preferable. When dicyandiamide is contained, mechanical properties of a cured product of the resin tend to be improved, which is preferable.

When the epoxy resin composition in the present invention contains dicyandiamide as a curing agent, the content of dicyandiamide is preferably such that the number of moles of active hydrogen of dicyandiamide is 0.4 times or more and 1 time or less with respect to a total number of moles of epoxy groups of the epoxy resin contained in the epoxy resin composition. When the molar ratio is 0.4 times or more, a cured product having good heat resistance and good mechanical properties, specifically, high strength and modulus tends to be obtained. When the molar ratio is 1 time or less, a cured product having excellent mechanical properties, specifically, excellent plastic deformability and excellent impact resistance tends to be obtained. In addition, when the number of moles of active hydrogen in the dicyandiamide is 0.5 times or more and 0.8 times or less, the heat resistance of the cured product tends to be more excellent, which is more preferable.

Examples of commercially available products of dicyandiamide include, but are not limited to, DICY 7 and DICY 15 (all are trade names and are manufactured by Mitsubishi Chemical Corporation.), and DICYANEX 1400F (trade name, manufactured by Air Products and Chemicals, Inc.).

Ureas are not particularly limited as long as they have a dimethylureide group in the molecule, produce an isocyanate group and dimethylamine by heating at a high temperature, and activate the epoxy resin in the present invention. Examples thereof include aromatic dimethylurea in which a dimethylureido group is bonded to an aromatic ring, and aliphatic dimethylurea in which a dimethylureido group is bonded to an aliphatic compound. Among them, aromatic dimethylurea is preferable from the viewpoint that a curing speed can be increased and a tendency to improve the heat resistance and bending strength of cured resin can be imparted.

As the aromatic dimethylurea, for example, phenyldimethylurea, methylenebis (phenyldimethylurea), tolylenebis (dimethylurea), and the like are suitably used. Specific examples thereof include 4,4'-methylenebis(phenyldimethylurea) (MBPDMU), 3-phenyl-1,1-dimethylurea (PDMU), 3-(3,4-dichlorophenyl)-1,1-dimethylurea (DCMU), 3-(3-chloro-4-methylphenyl)-1,1-dimethylurea, 2,4-bis(3,3-dimethylureido)toluene (TBDMU), and dimethylurea obtained from m-xylylene diisocyanate and dimethylamine. Among them, DCMU, MBPDMU, TBDMU, and PDMU are more preferable from the viewpoint that the curing speed can be increased and the tendency to improve the heat resistance of cured resin can be imparted. These may be used alone or in combination of two or more.

Examples of aliphatic dimethylurea include dimethylurea obtained from isophorone diisocyanate and dimethylamine, and dimethylurea obtained from hexamethylene diisocyanate and dimethylamine.

Commercially available ureas can also be used. Examples of commercially available products of DCMU include, but are not limited to, DCMU-99 (trade name, manufactured by Hodogaya Chemical Co., Ltd.).

Examples of commercially available products of MBPDMU include, but are not limited to, Technicure MDU-11 (trade name, manufactured by A & C Catalysts Inc.) and Omicure 52 (trade name, manufactured by PTI Japan Limited).

Examples of commercially available products of PDMU include, but are not limited to, Omicure 94 (trade name, manufactured by PTI Japan Limited).

Examples of commercially available products of TBDMU include, but are not limited to, Omicure 24 (trade name, manufactured by PTI Japan Limited) and U-CAT 3512T (trade name, manufactured by San-Apro Ltd.).

Examples of commercially available products of aliphatic dimethylurea include U-CAT 3513N (trade name, manufactured by San-Apro Ltd.), but are not limited thereto.

When the epoxy resin composition in the present invention contains ureas as a curing agent, the content of ureas is preferably 1 part by mass or more and 15 parts by mass or less, and more preferably 2 parts by mass or more and 10 parts by mass or less, based on 100 parts by mass of the epoxy resin contained in the epoxy resin composition. When the content of ureas is 1 part by mass or more, the epoxy resin contained in the epoxy resin composition can be sufficiently cured, the curing can be accelerated, and a tendency to improve the mechanical properties and heat resistance of the epoxy resin can be imparted. On the other hand, when the content of ureas is 15 parts by mass or less, the toughness of the resulting cured product tends to be kept high.

The imidazoles may be imidazole. Alternatively, imidazole adducts, imidazole clathrates, microencapsulated imidazoles, imidazole compounds stabilized by coordination with a stabilizer, or the like can also be used.

These imidazoles have a nitrogen atom having an unshared electron pair in its structure, whereby the epoxy group of the epoxy resin in the present invention can be activated, and curing and curing acceleration can be performed.

Specific examples of imidazole include, but are not limited to, 2-methylimidazole, 2-ethyl-4-methylimidazole, 2-undecylimidazole, 2-heptadecylimidazole, 1,2-dimethylimidazole, 2-phenylimidazole and 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine-isocyanuric acid adduct, 2-phenylimidazole-isocyanuric acid adduct, 2-methylimidazole-isocyanuric acid adduct, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethyl imidazole.

The imidazole adducts, imidazole clathrates including other molecules, microencapsulated imidazoles and imidazoles coordinated with a stabilizer are substances or compounds obtained by modifying imidazole described above. The adduct treatment, clathration with other molecules, microencapsulation and coordination with a stabilizer can decrease the activity of the imidazole, so that it is possible to exhibit excellent pot life in a low temperature range and enhance curing ability and curing acceleration ability.

As the imidazoles, commercially available products may be used. Examples of the commercial products of imidazole include 2E4MZ, 2P4MZ, 2PZ-CN, C11Z-CNS, C11Z-A, 2MZA-PW, 2MA-OK, 2P4MHZ-PW and 2PHZ-PW (all are trade names and are manufactured by Shikoku Chemicals Corporation), but are not limited thereto.

Examples of commercially available products of imidazole adducts include, but are not limited to, PN-50, PN-50J, PN-40, PN-40J, PN-31, PN-23 and PN-H, all of which have a structure formed by ring-opening addition of an imidazole compound to epoxy groups of an epoxy resin (all are trade names and are manufactured by Ajinomoto Fine-Techno Co., Inc.).

Examples of commercially available products of imidazole clathrates include, but are not limited to, TIC-188, KM-188, HIPA-2P4MHZ, NIPA-2P4MHZ, TEP-2E4MZ, HIPA-2E4MZ and NIPA-2E4MZ (all are trade names and are manufactured by Nippon Soda Co., Ltd.).

Examples of commercially available products of microencapsulated imidazoles include, but are not limited to, Novacure HX3721, HX3722, HX3742 and HX3748 (all are trade names and are manufactured by Asahi Kasei E-materials Corp.); and LC-80 (trade name, manufactured by A & C Catalysts Inc.).

As for the imidazole compounds coordinated with a stabilizer, for example, such compounds can be prepared by combining Cureduct P-0505 (bisphenol A diglycidyl ether/2-ethyl-4-methyl imidazole adduct), which is an imidazole adduct manufactured by Shikoku Chemicals Corporation, with L-07N (epoxy-phenol-borate blend), which is a stabilizer manufactured by Shikoku Chemicals Corporation. Similar effects can be obtained by using the above-mentioned various imidazoles or imidazole compounds such as imidazole adducts instead of the above-mentioned Cureduct P-0505. As an imidazole compound before being coordinated with a stabilizer, an imidazole compound showing low solubility with respect to an epoxy resin is suitably used, and the imidazole compound is preferably Cureduct P-0505 from this point of view.

When the epoxy resin composition in the present invention contains imidazoles as a curing agent, the content of imidazoles is preferably 1 part by mass or more and 15 parts by mass or less, and more preferably 2 parts by mass or more and 10 parts by mass or less, based on 100 parts by mass of the epoxy resin contained in the epoxy resin composition. When the content of imidazoles is 1 part by mass or more, the imidazole is likely to sufficiently cure and accelerate the curing of the epoxy resins contained in the epoxy resin composition, and a sufficiently high heat resistance is likely to be achieved. On the other hand, when the content of imidazoles is 15 parts by mass or less, a cured product more excellent in molding characteristics is likely to be obtained.

Examples of aromatic amines include, but are not limited to, 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di -t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3'5,5'-tetraisopropyl-4,4'-diaminodiphenylmethane, 3,3'-di-t-butyl-5,5'-diisopropyl-4,4'-diaminodiphenylmethane, 3,3'5,5'-tetra-t-butyl-4,4'-diaminodiphenylmethane, 4,4'-diaminodiphenylmethane, 4,4'-diaminodiphenylsulfone, 3,3'-diaminodiphenylsulfone, m-phenylenediamine, m-xylylenediamine, and diethyltoluenediamine. Among these, it is preferable to use one or more selected from 4,4'-diaminodiphenylsulfone and 3,3'-diaminodiphenylsulfone from the viewpoint of obtaining a cured product which is excellent in heat resistance and modulus and has a small linear expansion coefficient and suffers less reduction of heat resistance due to moisture absorption. 4,4'-diaminodiphenylsulfone is also preferable in that the tack life of the prepreg can be maintained for a long period of time. 3,3'-diaminodiphenylsulfone is preferable because it can increase the modulus and toughness of the cured product. In addition, it is preferable to blend 4,4'-diaminodiphenylsulfone and 3,3'-diaminodiphenylsulfone together with the epoxy resin composition because the heat resistance and modulus of the cured resin can be easily adjusted. These aromatic amines may be used alone or in combination as appropriate.

As the aromatic amines, commercially available products may be used. Examples of commercially available products of 4,4'-diaminodiphenyl sulfone include, but are not limited to, Seikacure S (trade name, active hydrogen equivalent 62 g/eq, manufactured by Wakayama Seika Kogyo Co., Ltd.), and Sumicure S (trade name, active hydrogen equivalent 62 g/eq, manufactured by Sumitomo Chemical Co., Ltd.). Examples of commercially available products of 3,3'-diaminodiphenyl sulfone include 3,3'-DAS (trade name, active hydrogen equivalent 62 g/eq, manufactured by Mitsui Fine Chemicals, Inc.), but are not limited thereto.

Examples of other commercially available products of aromatic amines include, but are not limited to, MDA-220 (trade name, active hydrogen equivalent 50 g/eq, manufactured by Mitsui Chemicals Inc.); "jER Cure (registered trademark)" W (active hydrogen equivalent 45 g/eq, manufactured by Mitsubishi Chemical Corporation.); and Lonzacure (registered trademark) M-DEA (active hydrogen equivalent 78 g/eq), "Lonzacure (registered trademark" M-DIPA (active hydrogen equivalent 92 g/eq), "Lonzacure (registered trademark)" M-MIPA (active hydrogen equivalent 78 g/eq), and "Lonzacure (registered trademark)" DETDA 80 (active hydrogen equivalent 45 g/eq) (each manufactured by Lonza, Inc.).

When the epoxy resin composition in the present invention contains aromatic amines as a curing agent, as for the content of aromatic amines, especially in the case of diaminodiphenylsulfone, the active hydrogen equivalent number of the amino group is preferably 0.5 times or more and 1.5 times or less, more preferably 0.6 times or more and 1.4 times or less with respect to the epoxy equivalent number of all epoxy resins contained in the epoxy resin composition. When the content is in such a range, the modulus, toughness and heat resistance of the resulting cured product are likely to fall within favorable ranges.

Examples of acid anhydride include a dicarboxylic acid compound having one cyclic acid anhydride group (-C(O)OC(O)-) in one molecule, and a tetracarboxylic acid compound having two cyclic acid anhydride groups in one molecule. Specifically, examples thereof include dodecenyl succinic anhydride, polyadipic anhydride, polyazelaic anhydride, methyl tetrahydrophthalic anhydride, methyl hexahydrophthalic anhydride, methyl himic anhydride, hexahydrophthalic anhydride, phthalic anhydride, trimellitic anhydride, 3-acetamidophthalic anhydride, 4-pentene-1,2-dicarboxylic anhydride, 6-bromo-1,2-dihydro-4H-3,1-benzoxazine-2,4-dione, 2,3-anthracene dicarboxylic anhydride, benzophenone tetracarboxylic dianhydride, and 3,3',4,4'-biphenyltetracarboxylic dianhydride. These may be used alone or in combination of two or more.

When the epoxy resin composition in the present invention contains an acid anhydride as a curing agent, as for the content of the acid anhydride, a ratio of the number of equivalent of acid groups of the acid anhydride is preferably 0.5 or more and 1.5 or less, more preferably 0.6 or more and 1.4 or less, still more preferably 0.7 or more and 1.3 or less with respect to the epoxy equivalent number of epoxy resin in the epoxy resin composition.

Phenols generally increase a crosslinking density of the cured product. Thus, by using phenols, a cured product excellent in heat resistance, moisture resistance, chemical resistance, and the like can be obtained.

As the phenols, commercially available products may be used. Examples of commercially available products of the phenols include, but are not limited to, TD-2131, TD-2106, TD-2093, TD-2091, TD-2090, VH-4150, VH-4170, KH-6021, KA-1160, KA-1163, and KA-1165 (all are trade names and are manufactured by DIC Corporation); and MR-970N, MR-600, MR-970, MR-506, MR-860, MR-3307, MR-583, MR-757, MR-508, MR-110, MR-750, MR-550M, MR-5809, MR-750N, M-1, MR-552, MR-130, MR-2015, MR-320, MR-2014, MR-2018, MR-3413, MR-3405, MR-506C, MR-3424, MWR-204, MWR-102E, MWR-202L, MR-332, MWR-102EM, MWR-1223, MWR-202, MWR-2205, MWR-102G, MWR-1201, and MW-201 (all are trade names and are manufactured by Meiwa Plastic Industries, Ltd.).

When the epoxy resin composition in the present invention contains phenols as a curing agent, the content of phenols is such an amount that the active hydrogen equivalent number of the hydroxyl group of the phenols with respect to the epoxy equivalent number of epoxy resin contained in the epoxy resin composition is preferably 0.5 times or more and 1.5 times or less, and more preferably 0.6 times or more and 1.4 times or less. When the content is in such a range, the modulus, toughness and heat resistance of the resulting cured product are likely to fall within favorable ranges.

Specific examples of the organic phosphine compound include, but are not limited to, tri-n-propylphosphine, tri-n-butylphosphine, triphenylphosphine, tetramethylphosphonium bromide, tetramethylphosphonium iodide, tetramethylphosphonium hydroxide, trimethylcyclohexylphosphonium chloride, trimethylcyclohexylphosphonium bromide, trimethylbenzylphosphonium chloride, trimethylbenzylphosphonium bromide, tetraphenylphosphonium bromide, triphenylmethylphosphonium bromide, triphenylmethylphosphonium iodide, triphenylethylphosphonium chloride, triphenylethylphosphonium bromide, triphenylethylphosphonium iodide, triphenylbenzylphosphonium chloride, and triphenylbenzylphosphonium bromide.

When the epoxy resin composition in the present invention contains the organic phosphine compound as a curing agent, the content of the organic phosphine compound is preferably 0.1 parts by mass or more and 5 parts by mass or less, and more preferably 0.5 parts by mass or more and 3 parts by mass or less, based on 100 parts by mass of the epoxy resin contained in the epoxy resin composition. When the content of the organic phosphine compound is 0.1 parts by mass or more, the imidazole is likely to sufficiently cure and accelerate the curing of the epoxy resins contained in the epoxy resin composition, and a sufficiently high heat resistance is likely to be achieved. On the other hand, when the content of the organic phosphine compound is 5 parts by mass or less, a cured product more excellent in molding processability is likely to be obtained.

In benzoxazines, the oxazine ring is opened by heat to generate a phenolic hydroxyl group, and the crosslinking density of a cured product is generally increased like phenols. Thus, by using benzoxazines, a cured product excellent in heat resistance, moisture resistance, flame retardancy, chemical resistance, and the like can be obtained.

Available benzoxazines include, but are not limited to, benzoxazine F-a and benzoxazine P-d (all are trade names and are manufactured by Shikoku Chemicals Corporation), JBZ-OP 100N and JBZ-BP 100N (all are trade names and are manufactured by JFE Chemical Corporation), BF-BXZ and BS-BXZ (all are trade names and are manufactured by Konishi Chemical Ind Co., Ltd.), and CR-276 (trade name, manufactured by Tohoku Chemical Industries, Ltd).

When the epoxy resin composition in the present invention contains benzoxazines as a curing agent, the content of benzoxazines is such an amount that the active hydrogen equivalent number of the hydroxyl group, generated when benzoxazines are heated, with respect to the epoxy equivalent number of epoxy resin contained in the epoxy resin composition is preferably 0.3 times or more and 3.0 times or less, and more preferably 0.4 times or more and 2.5 times or less. When the content is in such a range, the modulus, toughness and heat resistance of the resulting cured product are likely to fall within favorable ranges.

### (Solvent)

The epoxy resin composition preferably contains a solvent in order to suitably adjust the viscosity at the time of handling such as laminating of an epoxy resin film and reinforcing fibers. The solvent is used to ensure handleability and workability when an epoxy resin film is produced. The content of the solvent is not particularly limited, but usually, the epoxy resin composition is prepared so that the solid content concentration is preferably 25% by mass or more and 85% by mass or less, and more preferably 30% by mass or more and 80% by mass or less.

The solvent contained in the epoxy resin composition is not particularly limited, and examples thereof include acetone, methyl ethyl ketone, toluene, xylene, methyl isobutyl ketone, ethyl acetate, butyl acetate, propyl acetate, cyclohexanone, ethylene glycol monomethyl ether, ethylene glycol monomethyl ether acetate, N,N-dimethylformamide, N,N-dimethylacetamide, methanol, and ethanol. These solvents can be appropriately used as two or more kinds of mixed solvents.

### (Other thermoplastic resins)

The epoxy resin composition may contain a thermoplastic resin other than epoxy resin as necessary for the purpose of imparting functions such as resin flow control and toughness at the time of laminating an epoxy resin film and reinforcing fibers.

Examples of the thermoplastic resin other than epoxy resin include, but are not limited to, polyamide, polyester, polycarbonate, polyether sulfone, polyphenylene ether, polyphenylene sulfide, polyether ether ketone, polyether ketone, polyimide, polytetrafluoroethylene, polyether, polyolefin, liquid crystal polymer, polyarylate, polysulfone, polyacrylonitrile styrene, polystyrene, polyacrylonitrile, polymethyl methacrylate, ABS, AES, ASA, polyvinyl chloride, polyvinyl formal resin, and block polymer.

Among these thermoplastic resins, the epoxy resin composition preferably contains one or more selected from polyethersulfone and a polyvinyl formal resin from the viewpoint of excellent resin flow controllability and the like. Polyethersulfone is preferable from the viewpoint of further enhancing the heat resistance and flame retardancy of the epoxy resin composition. The polyvinyl formal resin is preferable from the viewpoint of easily controlling the tack of the resulting prepreg to a suitable range without impairing the heat resistance of the epoxy resin composition and improving the adhesiveness between reinforcing fibers and the epoxy resin composition. In addition, the block polymer is preferable because it improves the toughness and impact resistance of the cured product.

Examples of the polyvinyl formal resin include, but are not limited to, VINYLEC (registered trademark) K (average molecular weight: 59,000), VINYLEC (registered trademark) L (average molecular weight: 66,000), VINYLEC (registered trademark) H (average molecular weight: 73,000), and VINYLEC (registered trademark) E (average molecular weight: 126,000) (all are trade names and are manufactured by JNC Corporation.).

When the resulting fiber-reinforced epoxy resin composite sheet is required to have heat resistance exceeding 180°C, one or more selected from polyethersulfone and polyetherimide as other thermoplastic resins are preferably contained in the epoxy resin composition in the present invention. Examples of commercially available products of polyethersulfone include, but are not limited to, Sumikaexcel (registered trademark) 3600P (average molecular weight: 16,400), Sumikaexcel (registered trademark) 5003P (average molecular weight: 30,000), Sumikaexcel (registered trademark) 5200P (average molecular weight: 35,000), and Sumikaexcel (registered trademark) 7600P (average molecular weight: 45,300) (all manufactured by Sumitomo Chemical Co., Ltd.). Examples of commercially available products of polyetherimide include, but are not limited to, ULTEM 1000 (average molecular weight: 32,000), ULTEM 1010 (average molecular weight: 32,000), and ULTEM 1040 (average molecular weight: 20,000) (all are trade names and are manufactured by Sabic Innovative Plastics Ip B.V.).

Examples of block polymers include, but are not limited to, Nanostrength M52, Nanostrength M52N, Nanostrength M22, Nanostrength M22N, Nanostrength 123, Nanostrength 250, Nanostrength 012, Nanostrength E20 and Nanostrength E40 (all are trade names and are manufactured by Arkema Inc.); and TPAE-8, TPAE -10, TPAE-12, TPAE-23, TPAE-31, TPAE-38, TPAE-63, TPAE-100 and PA-260 (all are trade names and are manufactured by T & K TOKA Corporation).

These thermoplastic resins may be used alone or in combination of two or more.

When the epoxy resin composition contains a thermoplastic resin other than epoxy resin, the content of the thermoplastic resin is preferably 15 parts by mass or less, and more preferably 10 parts by mass or less, based on 100 parts by mass of all epoxy resins in the epoxy resin composition. When the content of the thermoplastic resin other than the epoxy resin is 15 parts by mass or less, an effect of improving the resin flow control and the molding processability tends to be exhibited well while maintaining impact resistance.

### (Optional components)

The epoxy resin composition may contain various known additives as necessary as long as the effects of the present invention are not impaired. Specifically, an antioxidant or a light stabilizer may be added to the epoxy resin composition in order to improve the storage stability of the composition or to avoid discoloration or alteration of the cured product.

Specific examples thereof include Sumilizer BHT, Sumilizer S, Sumilizer BP-76, Sumilizer MDP-S, Sumilizer GM, Sumilizer BBM-S, Sumilizer WX-R, Sumilizer NW, Sumilizer BP-179, Sumilizer BP-101, Sumilizer GA-80, Sumilizer TNP, Sumilizer TPP-R and Sumilizer P-16 (all manufactured by Sumitomo Chemical Co., Ltd.); Adeka Stab AO-20, Adeka Stab AO-30, Adeka Stab AO-40, Adeka Stab AO-50, Adeka Stab AO-60 AO-70, Adeka Stab AO-80, Adeka Stab AO-330, Adeka Stab PEP-4C, Adeka Stab PEP-8, Adeka Stab PEP-24G, Adeka Stab PEP-36, Adeka Stab HP-10, Adeka Stab 2112, Adeka Stab 260, Adeka Stab 522A, Adeka Stab 329K, Adeka Stab 1500, Adeka Stab C, Adeka Stab 135A, and Adeka Stab 3010 (all manufactured by Adeka Corporation); Tinuvin 770, Tinuvin 765, Tinuvin 144, Tinuvin 622, Tinuvin 111, Tinuvin 123, and Tinuvin 292 (all manufactured by Ciba Specialty Chemicals); and Fancryl FA-711M and FA-712HM (all manufactured by Hitachi Chemical Company, Ltd.).

When these antioxidants or light stabilizers are contained in the epoxy resin composition, the addition amount thereof is not particularly limited. However, the addition amount is preferably in a range of 0.001 parts by mass or more and 20 parts by mass or less, and more preferably in a range of 0.01 parts by mass or more and 15 parts by mass or less, based on 100 parts by mass of all epoxy resins in the epoxy resin composition.

Examples of other additives include known additives, such as thermosetting elastomers, thermoplastic elastomers, flame retardants (e.g., phosphorus-containing epoxy resins, red phosphorus, phosphazene compounds, phosphate salts, phosphate esters, etc.), silicone oils, wetting dispersants, antifoaming agents, defoaming agents, natural waxes, synthetic waxes, metal salts of linear fatty acids, acid amides, esters, mold release agents such as paraffins, crystalline silica, fused silica, calcium silicate, alumina, calcium carbonate, talc, powders of barium sulfate or the like, metal oxides, metal hydroxides, glass fibers, carbon nanotubes, inorganic fillers such as fullerenes, carbon fibers, organic fillers such as cellulose nanofibers, inorganic fillers subjected to surface organic treatment, etc., carbon black, coloring agents such as Bengala, silane coupling agents, and conductive materials. Furthermore, if necessary, a slip agent, a leveling agent, a polymerization inhibitor such as hydroquinone monomethyl ether, an ultraviolet light absorber and the like may also be blended.

These may be used alone or in combination of two or more.

### [Epoxy resin film]

The epoxy resin film constituting a part of the configuration of the fiber-reinforced epoxy resin composite sheet in the present embodiment is a film made of the epoxy resin composition. The content of the solvent in the epoxy resin film is preferably 0.2% by mass or more and 10% by mass or less. The epoxy resin film is an intermediate material for producing the fiber-reinforced epoxy resin composite sheet in the present embodiment. Reinforcing fibers are laminated on one or both surfaces of the epoxy resin film in a state where the opened fibers are oriented in a predetermined direction to obtain the fiber-reinforced epoxy resin composite sheet. As will be described in detail later, when the reinforcing fibers are laminated, heat treatment, pressure treatment, and the like are performed as necessary.

Although a method for producing an epoxy resin film is not particularly limited, a method in which an epoxy resin composition is applied to the surface of a base material such as a PET film or a release paper to form a film is preferable. Examples of the film forming method include roll coating, reverse coating, comma coating, knife coating, die coating, gravure coating, melt extrusion molding, solution casting, T-die method, calendering method, and the like, and any of these methods may be used. In addition, by using a co-extrusion method or a lamination method, a film can be produced by increasing the thickness or laminating layers having different resin compositions.

When an epoxy resin film is produced by such a method, drying, a curing reaction, or a combination thereof of the epoxy resin composition may be proceeded to such an extent that the film shape can be maintained by heating or the like. When the epoxy resin composition contains a solvent, it is preferable to remove the solvent so that the content of the solvent in the epoxy resin film is 0.2% by mass or more and 10% by mass or less when a total amount of the epoxy resin film is 100% by mass by removing most of the solvent using a technique such as heating, decompression, or air drying. The content of the solvent in the epoxy resin film is more preferably 0.3% by mass or more, still more preferably 0.5% by mass or more, and even more preferably 1.0% by mass or more. The content of the solvent in the epoxy resin film is more preferably 8% by mass or less, still more preferably 6% by mass or less, and even more preferably 3% by mass or less.

When the content of the solvent in the epoxy resin film is 10% by mass or less, the content of the solvent in the resulting fiber-reinforced epoxy resin composite sheet is less likely to exceed 5% by mass (described later), so that a fiber-reinforced epoxy resin composite sheet having few voids and more excellent molding processability and the like can be obtained. Although the content of the solvent in the epoxy resin film is preferably as small as possible, when the solvent content is 0.2% by mass or more, it is easy to laminate reinforcing fibers on the epoxy resin composition film. The content of the solvent in the epoxy resin film can be determined by heating the epoxy resin film in an oven at 200°C for 1.5 hours to volatilize the solvent, and measuring the weight.

The thickness of the epoxy resin film is not particularly limited, and is preferably 10 µm or more, more preferably 15 µm or more, and particularly preferably 20 µm or more. The thickness of the epoxy resin film is preferably 200 µm or less, more preferably 100 µm or less, and particularly preferably 50 µm or less. When the thickness of the epoxy resin film is equal to or more than the above lower limit, the epoxy resin film is hardly repelled by the resin, and a film can be produced. When the thickness of the epoxy resin film is equal to or less than the above upper limit, a form of the film is easily held during film production, which is preferable.

### [Reinforcing fiber (opened fiber)]

A fiber-reinforced epoxy resin composite sheet in the present embodiment comprises a film made of the epoxy resin composition as described above and reinforcing fibers laminated on one or both surfaces of the film, wherein in the reinforcing fibers, the opened fibers are oriented in a predetermined direction. The fiber-reinforced epoxy resin composite sheet in the present embodiment also includes a form in which the epoxy resin film is further laminated on the surface on which the reinforcing fibers are laminated. In other words, the fiber-reinforced epoxy resin composite sheet in the present embodiment may have a configuration in which the epoxy resin film, the reinforcing fibers in which the opened fibers are oriented in a predetermined direction, and the epoxy resin film are laminated in this order. According to such a configuration, it is possible to take an optimum configuration in advance as an intermediate material corresponding to each molded article finally produced.

Here, in the entire specification, the term "laminate" used in "reinforcing fibers laminated on one or both surfaces of an epoxy resin film" also includes the meanings of "laminating after fusing at least in a part", "laminating after adhesion at least in a part", and "laminating after pressure bonding at least in a part", depending on the physical property values of the epoxy resin film and the shape thereof, the type of treatment performed for laminating and the conditions thereof, and the like. More specifically, the "laminated reinforcing fibers" also include "laminated reinforcing fibers" in a state after being subjected to a heat treatment, a pressure treatment, a cooling treatment, a combination thereof, and the like as necessary. In addition, in the present specification, "a state where opened fibers are oriented in a predetermined direction" means, for example, a state where a plurality of fibers opened from reinforcing fibers extend in parallel directions or substantially parallel directions on the same plane, preferably at the same interval or substantially the same interval.

The material of the reinforcing fibers in which the opened fibers are oriented in a predetermined direction is not particularly limited, and may be appropriately selected from materials known as reinforcing fibers constituting the fiber-reinforced resin composite sheet according to the application and the like. Specific examples of the material of the reinforcing fiber include various inorganic fibers or organic fibers such as carbon fibers, aramid fibers, nylon fibers, high-strength polyester fibers, glass fibers, boron fibers, alumina fibers, silicon nitride fibers, and basalt fibers. Among these fibers, carbon fibers, aramid fibers, glass fibers, boron fibers, alumina fibers, and silicon nitride fibers are preferable from the viewpoint of specific strength and specific elasticity. Furthermore, among these fibers, carbon fibers are particularly preferable from the viewpoint of molding processability, heat resistance, electromagnetic wave shielding properties, and lightness. When carbon fibers are used as the reinforcing fibers, surface treatment with metal may be performed.

These materials of the reinforcing fibers in which the opened fibers are oriented in a predetermined direction may be used alone or in combination of two or more kinds thereof.

In the fiber-reinforced epoxy resin composite sheet in the present embodiment, the volume content Vf of the reinforcing fibers needs to be 5 to 70%. When the volume content Vf of the reinforcing fibers is 5% or more, a sufficient reinforcing effect by the reinforcing fibers is exhibited, so that the fiber-reinforced epoxy resin composite sheet in the present embodiment has excellent strength, particularly bending strength and tensile strength. On the other hand, when the volume content Vf of the reinforcing fibers is 70% or less, the fiber-reinforced epoxy resin composite sheet in the present embodiment can maintain good molding processability.

The volume content Vf of the reinforcing fibers is preferably 20% or more, and more preferably 40% or more. The volume content Vf of the reinforcing fibers is preferably 65% or less, and more preferably 60% or less. The volume content Vf of the reinforcing fibers can be set by adjusting the type and thickness of the reinforcing fibers, a fiber width in which the fibers are oriented, the thickness of the resin film, and the like. The mechanical characteristics of a final molded article can be improved by appropriately controlling the temperature, pressure, and the like applied at the time of producing the fiber-reinforced epoxy resin composite sheet. The volume content Vf of the reinforcing fibers in the present specification is a value measured by a combustion method.

The fiber-reinforced epoxy resin composite sheet in the present embodiment can be produced by including a step of laminating, under heating, the reinforcing fibers in which the opened fibers are oriented in a predetermined direction on one or both surfaces of the epoxy resin film. This production method will be described with reference to the drawings.

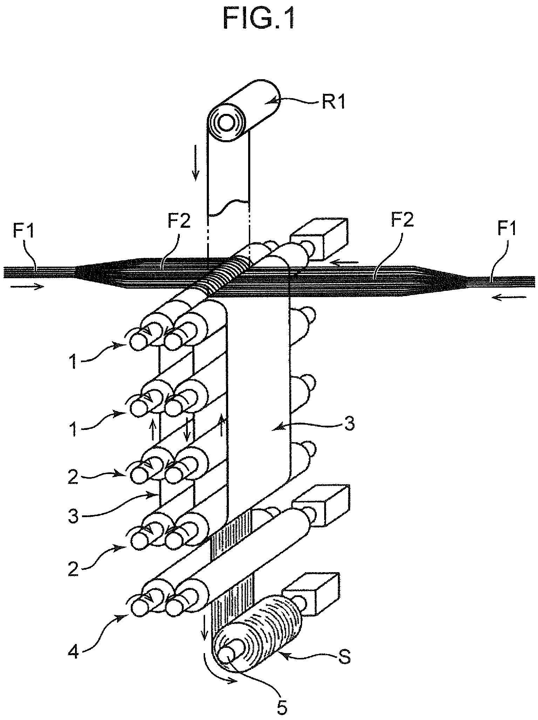

FIG. 1 is a schematic view showing a configuration example of an apparatus used for producing the fiber-reinforced epoxy resin composite sheet of the present embodiment. In FIG. 1, each reference numeral represents a heating roll 1, a cooling roll 2, an endless belt 3, a drawing roll 4, a winding bobbin 5, a carbon fiber bundle F1, an opened fiber F2, an epoxy resin film R1, and a fiber-reinforced epoxy resin composite sheet S. A production apparatus shown in FIG. 1 is an apparatus that continuously produces the fiber-reinforced epoxy resin composite sheet S containing the reinforcing fibers in which the opened fibers are oriented in a predetermined direction using a reinforcing fiber bundle F1 and the epoxy resin film R1.

Specifically, the production apparatus includes a plurality of pairs (two pairs in FIG. 1) of the heating rolls 1 arranged side by side in a vertical direction, a plurality of pairs (two pairs in FIG. 1) of the cooling rolls 2 located below a group of the heating rolls 1 and arranged side by side in the vertical direction, a pair of the endless belts 3 wound around each column of the two heating rolls 1 and the two cooling rolls 2 arranged side by side in the vertical direction, a pair of the drawing rolls 4 located below the pair of endless belts 3, and the winding bobbin 5.

Although not shown, in the vicinity of the heating roll 1 at an uppermost stage, a fiber opening mechanism that continuously forms the opened fibers F2 by opening the reinforcing fiber bundle F1 and spreading the reinforcing fiber bundle F1 in a band shape is provided. The fiber opening mechanism may be, for example, a mechanism that can spread the fiber bundle and flatly spread long fibers so as to extend the long fibers in the same direction or substantially the same direction. For example, various mechanisms such as a mechanism of tapping and spreading the fiber bundle and a mechanism of blowing air to the fiber bundle and spreading the fiber bundle are used.

Each of the two pairs of heating rolls 1 is heated by an electric heater, a heating fluid, or the like. The two pairs of heating rolls 1 are heated while sandwiching the opened fibers F2 and the epoxy resin film R1 from both sides in a state where the opened fibers F2 and the epoxy resin film R1 are superposed with each other with the endless belt 3 interposed therebetween, whereby the opened fibers F2 are continuously laminated on the epoxy resin film R1.

Each of the plurality of pairs of cooling rolls 2 is cooled using a cooling fluid or the like. The plurality of pairs of cooling rolls 2 continuously form the fiber-reinforced epoxy resin composite sheet S having a predetermined thickness by sandwiching the epoxy resin film R1 from both sides in a state where the opened fibers F2 are laminated with the endless belt 3 interposed therebetween, cooling the epoxy resin film R1, and sending the epoxy resin film R1 downward.

The pair of drawing rolls 4 continuously draws the fiber-reinforced epoxy resin composite sheet S downward while applying tension to the produced fiber-reinforced epoxy resin composite sheet S.

The winding bobbin 5 is rotated by a drive source such as a motor, and sequentially winds up the fiber-reinforced epoxy resin composite sheet S drawn out by the pair of drawing rolls 4. As a result, the fiber-reinforced epoxy resin composite sheet S having a rolled shape is formed.

It is also possible to produce the fiber-reinforced epoxy resin composite sheet S by a method in which the epoxy resin film R1 and the opened reinforcing fibers are caused to flow together in a predetermined direction, for example, substantially parallel directions with substantially the same interval on the same plane and wound using a film having high releasability without using the endless belt 3 shown in FIG. 1.

When the reinforcing fibers in which the opened fibers are oriented in a predetermined direction are laminated on one surface of the epoxy resin film F1, the opened fibers F2 shown in FIG. 1 may be sent from one side without being sent from both sides. As a result, the fiber-reinforced epoxy resin composite sheet S in which the opened fibers F2 are laminated on one surface of the epoxy resin film under heating is obtained.

The thickness of the fiber-reinforced epoxy resin composite sheet is not particularly limited, and is preferably 25 µm or more, more preferably 30 µm or more, and still more preferably 35 µm or more. The thickness of the fiber-reinforced epoxy resin composite sheet is preferably 230 µm or less, more preferably 130 µm or less, and still more preferably 80 µm or less. When the thickness of the fiber-reinforced epoxy resin composite sheet in the present embodiment is within such a range, the sheet is excellent in molding processability, and the mechanical characteristics of a finally obtained molded article are also improved, which is preferable.

Specifically, when the uniformly opened and thinly spread reinforcing fibers and the epoxy resin are combined under heating conditions, the resin is easily impregnated with the fibers. By obtaining a fiber-reinforced epoxy resin composite sheet excellent in impregnation property, the strength of the reinforcing fiber can be sufficiently exhibited. When stress is applied, delamination of a laminate (a structure or the like described later) in which a plurality of the fiber-reinforced epoxy resin composite sheets are laminated is less likely to occur, and fatigue characteristics are also excellent. In addition, it is possible to further improve the molding processability when the fiber-reinforced epoxy resin composite sheet is used. Although the thickness of the fiber-reinforced epoxy resin composite sheet is also affected by the thickness of the resin film, the thickness of the fiber-reinforced epoxy resin composite sheet can be set within the above range by appropriately controlling the temperature and pressure, etc. applied during the production of the fiber-reinforced epoxy resin composite sheet.

The content of the solvent in the fiber-reinforced epoxy resin composite sheet is preferably 0.02% by mass or more and 5% by mass or less. As described above, the content of the solvent in the fiber-reinforced epoxy resin composite sheet is affected by the solvent content in the epoxy resin film. When the content of the solvent in the fiber-reinforced epoxy resin composite sheet is within the above-mentioned range, a fiber-reinforced epoxy resin composite sheet having few voids and more excellent molding processability and the like is obtained. The content of the solvent in the fiber-reinforced epoxy resin composite sheet is determined in the same manner as in the measurement of the solvent content in the epoxy resin film.

The fiber-reinforced epoxy resin composite sheet in the present embodiment is suitably used in sports applications, general industrial applications, and aerospace applications. More specifically, in sport applications, the fiber-reinforced plastic is suitably used for golf shafts, fishing rods, tennis and badminton rackets, sticks for hockey etc., and ski poles. Furthermore, in general industrial applications, the fiber-reinforced epoxy resin composite sheet is suitably used for structural materials of moving bodies such as automobiles, ships, and railway vehicles, drive shafts, leaf springs, wind turbine blades, pressure vessels, flywheels, paper rollers, roofing materials, cables, repair reinforcement materials, and the like.

### [Structure]

A fiber-reinforced composite plate or a fiber-reinforced molded article obtained by laminating the plurality of fiber-reinforced epoxy resin composite sheets in the above-described embodiment is applied as a structure used in various applications. This structure may be composed only of the fiber-reinforced composite plate, the fiber-reinforced molded article, or a combination thereof in the present embodiment. Alternatively, the structure may be constituted of the fiber-reinforced composite plate, the fiber-reinforced molded article, or the combination thereof and another material. Examples of the other materials include metals and injection-molded thermoplastic resin members.

When the structure is constituted of the fiber-reinforced composite plate, the fiber-reinforced molded article, or the combination thereof and a metal, it is more preferable as adhesive strength between the fiber-reinforced composite plate or the like and the metal, for example, aluminum is higher. As shown in the later Examples, the fiber-reinforced composite plate or the fiber-reinforced molded article in the present embodiment is excellent in aluminum adhesive strength as compared with a molded article using a fiber-reinforced polyamide 6 resin composite sheet. Specifically, the aluminum adhesive strength of the fiber-reinforced composite plate or the fiber-reinforced molded article in the present embodiment is preferably 0.3N or more, more preferably 0.34 or more, and still more preferably 0.4 or more when measured by the same method as a method of measuring the aluminum adhesive strength shown in the later Examples. The upper limit is not particularly limited. As described above, it can be seen that the fiber-reinforced epoxy resin composite sheet of the present invention is excellent in versatility from the viewpoint of having excellent adhesive strength with a metal material in the configuration of the fiber-reinforced composite plate or the fiber-reinforced molded article.

In addition, as shown in the later Examples, the fiber-reinforced composite plate or the fiber-reinforced molded article produced from the fiber-reinforced epoxy resin composite sheet of the present invention has lower water absorbency as compared with the fiber-reinforced polyamide 6 resin composite sheet and a commercially available thermosetting epoxy resin impregnated carbon fiber prepreg. Specifically, a water absorption rate of the fiber-reinforced composite plate or the fiber-reinforced molded article is preferably 1.5% or less, more preferably 1% or less, and still more preferably 0.8% or less when measured by the same method as a method of measuring the water absorption rate shown in the later Examples. As described above, it can be seen that the fiber-reinforced epoxy resin composite sheet of the present invention is excellent in performance stability from the viewpoint of low water absorbency in the configuration of the fiber-reinforced composite plate or the fiber-reinforced molded article, that is, low water absorbency also for the fiber-reinforced epoxy resin composite sheet as an intermediate material.

Since a part or all of such a structure is constituted of the fiber-reinforced epoxy resin composite sheet in the present embodiment, the structure is excellent in flame retardancy, heat resistance, versatility, and performance stability, and also has good mechanical characteristics. Such a structure can be applied not only to the above-described applications but also to, for example, interior parts of aircrafts and automobiles, housings for electric devices, housings for electronic devices, and the like.

The fiber-reinforced composite plate or the fiber-reinforced molded article in the present embodiment is formed by laminating the plurality of fiber-reinforced epoxy resin composite sheets. When these are produced, the plurality of fiber-reinforced epoxy resin composite sheets are laminated to be heated and pressed, that is, press-molded. A heating temperature at this time is preferably 80 to 300°C, and more preferably 180 to 220°C. In addition, a pressurizing force is preferably 0.5 to 15 MPa, and more preferably 2 to 10 MPa.

Although the outline of the present invention has been described above, the fiber-reinforced epoxy resin composite sheet and the like in the present embodiment are summarized as follows.

A fiber-reinforced epoxy resin composite sheet according to a first aspect of the present invention is a fiber-reinforced epoxy resin composite sheet comprising an epoxy resin film and reinforcing fibers laminated on one or both surfaces of the epoxy resin film, wherein in the reinforcing fibers, opened fibers are oriented in a predetermined direction, and the volume content Vf of the reinforcing fiber is 5 to 70%.

By adopting such a configuration, a fiber-reinforced epoxy resin composite sheet excellent in molding processability is obtained.

The fiber-reinforced epoxy resin composite sheet of the first aspect also includes the form in which the epoxy resin film is further laminated on the surface on which the reinforcing fibers are laminated. In other words, the fiber-reinforced epoxy resin composite sheet may have the configuration in which the epoxy resin film, the reinforcing fibers in which the opened fibers are oriented in a predetermined direction, and the epoxy resin film are laminated in this order.

By adopting such a configuration, it is possible to take an optimum configuration in advance as an intermediate material corresponding to each molded article finally produced.

In the fiber-reinforced epoxy resin composite sheet of the first aspect, the epoxy resin film is preferably made of the epoxy resin having a weight average molecular weight of 1500 or more. Alternatively, the epoxy resin film may be a mixture of the epoxy resin having a weight average molecular weight of 1500 or more and the epoxy resin having a weight average molecular weight of less than 1500, and the ratio of the epoxy resin having a weight average molecular weight of 1500 or more to 100 parts by mass of the total epoxy resin may be 60 parts by mass or more.

By adjusting the weight average molecular weight in the epoxy resin of the epoxy resin film and the ratio thereof as described above, excellent impact resistance can be imparted to the fiber-reinforced epoxy resin composite sheet.

The thickness of the fiber-reinforced epoxy resin composite sheet of the first aspect is preferably 25 to 230 µm. By securing such a thickness, the sheet is excellent in molding processability.

In the fiber-reinforced epoxy resin composite sheet of the first aspect, the reinforcing fibers are preferably carbon fibers. By using carbon fibers, the molding processability, heat resistance, electromagnetic wave shielding property, and lightweight property of the fiber-reinforced epoxy resin composite sheet can be secured.

In the fiber-reinforced epoxy resin composite sheet of the first aspect, the content of the solvent in the epoxy resin film is preferably 0.2% by mass or more and 10% by mass or less. When the solvent content is within such a range, the molding processability and the like of the fiber-reinforced epoxy resin composite sheet can be further improved.

In a fiber-reinforced composite plate of a second aspect and a fiber-reinforced composite of a third aspect of the present invention, a plurality of the fiber-reinforced epoxy resin composite sheets of the first aspect are laminated. These are suitable as materials of structures used in various applications.

A method for producing a fiber-reinforced epoxy resin composite sheet according to a fourth aspect of the present invention is a method for producing the fiber-reinforced epoxy resin composite sheet of the first aspect, and comprises a step of laminating, under heating, reinforcing fibers in which opened fibers are oriented in a predetermined direction on one or both surfaces of the epoxy resin film.

A method for producing a fiber-reinforced molded article according to a fifth aspect of the present invention is a method for producing the fiber-reinforced molded article of the third aspect, and comprises a step of laminating the plurality of fiber-reinforced epoxy resin composite sheets in a mold and press-molding the laminate at a temperature of 80 to 300°C and a pressure of 0.5 to 15 MPa.

### Examples

Hereinafter, the present invention will be more specifically described with reference to Examples, but the present invention is not limited to the following Examples as long as it does not exceed the gist thereof.

### [Raw material]

Raw materials used in Examples, specifically, epoxy resin, carbon fibers, and a solvent are as follows. By using the solvent, an epoxy resin composition, specifically, a methyl ethyl ketone solution of an epoxy resin was prepared as described later.

### (Epoxy resin)

(a) jER 1256: solid bisphenol A type epoxy resin, Mw: about 50,000, epoxy equivalent weight: about 8,000 g/eq, manufactured by Mitsubishi Chemical Corporation.

### (Curing agent)

(b) Benzoxazine P-d, manufactured by Shikoku Chemicals Corporation
(c) Phenol novolac H-4, manufactured by Meiwa Plastic Industries, Ltd.
   (Carbon fiber)
(d) TR50S15L (PAN-based carbon fiber), 15K (15000 filament), manufactured by Mitsubishi Chemical Corporation.
(e) T-700 (PAN-based carbon fiber), 12K (12000 filament), manufactured by Toray Industries, Inc.

### (Solvent)

Methyl ethyl ketone

### <Example 1>

An epoxy resin (a) (solid) and a solvent (liquid) were weighed into a container so that a solid concentration was 40% by mass. They were mixed and dissolved in the container to obtain a 40% by mass methyl ethyl ketone solution of the epoxy resin. This solution was applied onto a silicone-treated PET film with a slot die type coating device (manufactured by Yasui Seiki Inc.) at a coating speed of 2.0 m/min, and dried at a drying temperature of 150°C for 6 minutes to obtain an epoxy resin film having a thickness of 50 µm. In this epoxy resin film, 2.1% by mass of the solvent remained.

Using the epoxy resin film and the carbon fiber (d), the fiber-reinforced epoxy resin composite sheet of the present embodiment was obtained while opening a carbon fiber bundle by the production apparatus shown in FIG. 1. At this time, the roll temperature (the temperature of the heating roll 1 shown in FIG. 1) was 220°C, and a feeding speed was 10 m/min.

The obtained fiber-reinforced epoxy resin composite sheet is obtained by laminating the opened carbon fiber bundle on one surface of the epoxy resin film. The volume content of the carbon fibers, that is, the fiber volume content Vf was 43%, and the thickness of the fiber-reinforced epoxy resin composite sheet was 40 to 60 µm.

15 fiber-reinforced epoxy resin composite sheets obtained were laminated in a 0° direction, 15 sheets were laminated in a 45° direction, 15 sheets were laminated in a 90° direction, and 15 sheets were laminated in a -45° direction, and a molded article of 300 mm × 300 mm × 2 mm (thickness) was obtained under heating and pressurizing conditions (press molding conditions) of a temperature of 220°C, a pressure of 2 MPa, and 30 minutes.

### <Example 2>

The epoxy resin (a) (solid), a curing agent (b) and the solvent (liquid) were weighed into a container so that the solid concentration was 40% by mass. They were mixed and dissolved in the container to obtain a 40% by mass methyl ethyl ketone solution of the epoxy resin. This solution was applied onto a silicone-treated PET film with a slot die type coating device (manufactured by Yasui Seiki Inc.) at a coating speed of 2.0 m/min, and dried at a drying temperature of 150°C for 6 minutes to obtain an epoxy resin film having a thickness of 50 µm. In this epoxy resin film, 2.3% by mass of the solvent remained.

The obtained fiber-reinforced epoxy resin composite sheet is obtained by laminating the opened carbon fiber bundle on one surface of the epoxy resin film. The volume content of the carbon fibers, that is, the fiber volume content Vf was 40%, and the thickness of the fiber-reinforced epoxy resin composite sheet was 40 to 60 µm.

15 fiber-reinforced epoxy resin composite sheets obtained were laminated in a 0° direction, 15 sheets were laminated in a 45° direction, 15 sheets were laminated in a 90° direction, and 15 sheets were laminated in a -45° direction, and a molded article of 300 mm × 300 mm × 2 mm (thickness) was obtained under heating and pressurizing conditions (press molding conditions) of a temperature of 220°C, a pressure of 2 MPa, and 30 minutes.

### <Example 3>

A fiber-reinforced epoxy resin composite sheet having a fiber volume content Vf of 43% and a thickness of 40 to 60 µm was obtained by the same method as in Example 1 except that carbon fibers (e) were used. 30 fiber-reinforced epoxy resin composite sheets obtained were laminated in the 0° direction and 30 sheets were laminated in the 90° direction, and a molded article of 110 mm × 110 mm × 2 mm (thickness) was obtained under heating and pressurizing conditions (press molding conditions) of a temperature of 120°C, a pressure of 5 MPa, and 15 minutes.

### <Example 4>

A fiber-reinforced epoxy resin composite sheet having a fiber volume content Vf of 60% and a thickness of 60 to 80 µm was obtained by the same method as in Example 1 except that the opened carbon fiber bundles were laminated on both surfaces of the epoxy resin film.

11 fiber-reinforced epoxy resin composite sheets obtained were laminated in the 0° direction, 11 sheets were laminated in the 45° direction, 11 sheets were laminated in the 90° direction, and 11 sheets were laminated in the -45° direction, and a molded article of 300 mm × 300 mm × 2 mm (thickness) was obtained under heating and pressurizing conditions (press molding conditions) of a temperature of 220°C, a pressure of 2 MPa, and 30 minutes.

### <Comparative Example 1>

A fiber-reinforced resin composite sheet having a fiber volume content Vf of 43% and a thickness of 40 to 60 µm was obtained by the same method as in Example 1 except that a polyamide 6 resin ("DIAMILON C-Z" manufactured by Mitsubishi Chemical Corporation.) film was used as the resin film. In addition, a molded article of 300 mm × 300 mm × 2 mm (thickness) was obtained by the same method as in Example 1.

### <Comparative Example 2>

As an alternative to the fiber-reinforced epoxy resin composite sheets of Examples 1 to 4, a prepreg ("Pyrofill #350" manufactured by Mitsubishi Chemical Corporation.) in which a thermosetting epoxy resin was impregnated with an aggregate of carbon fibers was used. The prepreg had a carbon fiber volume content, that is, a fiber volume content Vf of 58%, and a thickness of 170 µm. 3 prepregs obtained were laminated in the 0° direction, 3 prepregs were laminated in the 45° direction, 3 prepregs were laminated in the 90° direction, and 3 prepregs were laminated in the -45° direction. Next, this laminate was heated and cured in an autoclave under the conditions of a pressure of 590 KPa, a temperature of 130°C, and 120 minutes to obtain a molded article of 300 mm × 300 mm × 2 mm (thickness).

The flexural rupture strength and flexural modulus, the tensile strength and tensile modulus (excluding Example 3), the water absorption rate, and the aluminum adhesive strength of each of the molded articles obtained in Examples 1 to 4 and Comparative Examples 1 to 2 were measured under the following conditions. The results are shown in Table 1 below together with the characteristics of each fiber-reinforced epoxy resin composite sheet (or prepreg) and each molded article.

### [Flexural rupture strength and flexural modulus]

The flexural rupture strength and the flexural modulus of the molded article were measured in accordance with a 4-point bending test (method B) of JIS K 7074: 1988.

### [Tensile strength and tensile modulus]

The tensile strength and the tensile modulus of the molded article were measured in accordance with JIS K 7165: 2008.

### [Water absorption rate]

A test piece having a size of 2 cm × 2 cm × 2 mm of each molded article was dried at 85°C and 0.1 MPa over 8 hours. After drying, the pressure was returned to normal pressure, and the test piece was held at 85°C for 16 hours. Thereafter, the temperature was returned to room temperature in a desiccator, and a mass (A) of the test piece was measured. Thereafter, the test piece was vertically disposed under the conditions of 85°C and 85% RH, and held for 7 days. Thereafter, the temperature was returned to normal temperature, and a mass (B) of the test piece was immediately measured. A mass change rate of the molded article, that is, a moisture absorption rate (%) was determined from the formula: ((B)-(A))/(A) × 100. An evaluation test of the water absorption rate was performed using three test pieces for each Example or Comparative Example, and the average value was taken as the moisture absorption rate (%).

### [Aluminum adhesive strength]

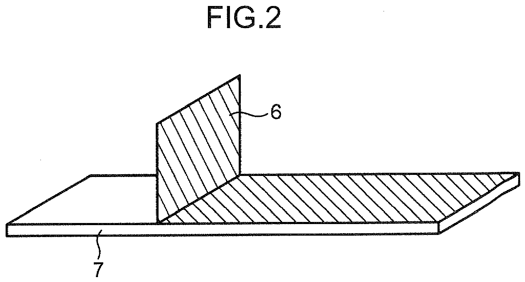

A surface of a test piece of a molded article of 12.7 (long side length) cm × 6 cm (short side length) × 2 mm (thickness) was wiped with absolute ethanol, and dried at 85°C and 0.1 MPa over 8 hours. Then, the pressure was returned to normal pressure, the test piece was held at 85°C for 16 hours, and then the temperature was returned to room temperature in a desiccator. Thereafter, Quick 5 manufactured by Konishi Co., Ltd. was applied as an adhesive to a surface of the test piece of the molded article, an aluminum foil (manufactured by UACJ Foil Corporation., product name: 1N30) of 12.7 (long side length) cm × 5 cm (short side length) × 15 µm (thickness) was attached by 4 cm (short side length), a 1 kg SUS plate was placed thereon, and pressure bonding was performed over 1 hour to prepare a test sample (see FIG. 2; each reference numeral in FIG. 2 represents an aluminum foil 6 or a test piece 7 of the molded article). The adhesive protruding from the test sample was removed with a cutter and stored at 23°C and 50% RH for 24 hours. Thereafter, a peeling test was performed at a tensile speed of 50 mm/min at an angle of 90° using a 5582 type universal tester manufactured by Instron Corp. This peeling test was performed at 3 points for each test piece of the molded article, and an average value obtained by excluding data of 0.5 cm at an initial stage and a final stage was taken as a value of aluminum adhesive strength (N).

**[Table 1]**

| | Type of resin | Type of carbon fiber | Fiber volume content Vf (%) | Thickness of resin composite sheet (thickness of prepreg) (µm) | Conditions during production of molded article | Flexural rupture strength (Mpa) | Flexural modulus (Gpa) | Tensile strength (Mpa) | Tensile modulus (Gpa) | Water absorption rate (%) | Aluminum adhesive strength (N) |
|---|---|---|---|---|---|---|---|---|---|---|---|
| Example 1 | Epoxy resin (a) | (d) (One surface of film) | 43 | 40-60 | 220°C 2 MPa | 723.9 | 31.0 | 648.6 | 32.9 | 0.8 | 0.50 |
| Example 2 | Epoxy resin (a) (containing curing agents (b) and (c)) | (d) (One surface of film) | 40 | 40-60 | 220°C 2 MPa | 734.4 | 32.4 | 648.1 | 33.5 | 0.8 | 0.34 |
| Example 3 | Epoxy resin (a) | (e) (One surface of film) | 43 | 40-60 | 120°C 5 MPa | 423.2 | 30.5 | - | - | 0.8 | 0.50 |
| Example 4 | Epoxy resin (a) | (d) (Both surfaces of film) | 60 | 60-80 | 220°C 2 MPa | 923.7 | 46.3 | 917.0 | 45.9 | 0.6 | 0.50 |
| Comparative Example 1 | Polyamide 6 resin | (d) (One surface of film) | 43 | 40-60 | 220°C 2 MPa | 720.8 | 30.9 | 717.5 | 34.9 | 2.1 | 0.28 |
| Comparative Example 2 | Thermosetting epoxy resin impregnated carbon fiber prepreg ("Pyrofill #350" manufactured by Mitsubishi Chemical Corporation.) | | 58 | 170 | 130°C 590 kPa | 1010.0 | 40.5 | 810.3 | 47.1 | 1.2 | 0.34 |

As is apparent from this result, the molded articles in Examples 1 to 4 had good flexural rupture strength and flexural modulus, and the molded articles in Examples 1 to 2 and 4 had good characteristics of tensile strength and tensile modulus. That is, it was found that the fiber-reinforced epoxy resin composite sheets in Examples 1 to 4 not only had excellent molding processability due to the relatively small thickness of the sheet itself, but also had substantially good mechanical characteristics of the final molded articles in Examples 1 to 4 as compared with the mechanical characteristics of the molded article using the prepreg in Comparative Example 2. In Table 1, "-" indicates unmeasured.

In addition, the molded articles in Examples 1 to 4 had a remarkably low water absorption rate and high aluminum adhesive strength as compared with the molded article produced using the polyamide 6 resin in Comparative Example 1 as an alternative and the molded article in Comparative Example 2. That is, it can be seen that the fiber-reinforced epoxy resin composite sheet of the present invention is particularly less likely to cause a decrease in physical properties such as strength of a molded article and a dimensional change due to water absorption, and furthermore, is suitably used for a structure formed by combining a metal material, particularly aluminum, and the like.

As described above, it was found that the fiber-reinforced epoxy resin composite sheet according to the present invention was excellent in performance stability and versatility from the viewpoint of having low water absorbency and excellent in the adhesive strength to a metal material, particularly the aluminum adhesive strength.

This application is based on Japanese Patent Application No. 2019-114358 filed in Japan Patent Office on June 20, 2019, the contents of which are hereby incorporated by reference.

To describe the present invention, the invention has been described in the foregoing description appropriately and sufficiently using embodiments with reference to specific examples and the like. However, it is to be understood that changes and/or modifications to the foregoing embodiments will readily occur to those skilled in the art. Therefore, unless a change or modification made by those skilled in the art is beyond the scope of the appended claims, such change or modification is to be embraced within the scope of the appended claims.

### Industrial Applicability

In the technical field related to the fiber-reinforced resin composite sheet, the present invention has wide industrial applicability in sports and leisure applications, general industrial applications, aircraft material applications, and other applications.

## Claims

1. A fiber-reinforced epoxy resin composite sheet comprising:
an epoxy resin film; and
reinforcing fibers laminated on one or both surfaces of the epoxy resin film,
wherein in the reinforcing fibers, opened fibers are oriented in a predetermined direction, and a volume content Vf of the reinforcing fiber is 5 to 70%.

2. The fiber-reinforced epoxy resin composite sheet according to claim 1, wherein the epoxy resin film comprises an epoxy resin having a weight average molecular weight of 1500 or more.

3. The fiber-reinforced epoxy resin composite sheet according to claim 1, wherein the epoxy resin film is a mixture of the epoxy resin having a weight average molecular weight of 1500 or more and an epoxy resin having a weight average molecular weight of less than 1500, and a ratio of the epoxy resin having a weight average molecular weight of 1500 or more to 100 parts by mass of the total epoxy resin is 60 parts by mass or more.

4. The fiber-reinforced epoxy resin composite sheet according to any one of claims 1 to 3 having a thickness of 25 to 230 µm.

5. The fiber-reinforced epoxy resin composite sheet according to any one of claims 1 to 4, wherein the reinforcing fibers are carbon fibers.

6. The fiber-reinforced epoxy resin composite sheet according to any one of claims 1 to 5, wherein a content of a solvent in the epoxy resin film is 0.2% by mass or more and 10% by mass or less.

7. A fiber-reinforced composite plate comprising a laminate of a plurality of the fiber-reinforced epoxy resin composite sheets according to any one of claims 1 to 6.

8. A fiber-reinforced molded article comprising a laminate of a plurality of the fiber-reinforced epoxy resin composite sheets according to any one of claims 1 to 6.

9. A method for producing the fiber-reinforced epoxy resin composite sheet according to any one of claims 1 to 6, the method for producing the fiber-reinforced epoxy resin composite sheet comprising a step of laminating, under heating, reinforcing fibers in which opened fibers are oriented in a predetermined direction on one or both surfaces of the epoxy resin film.

10. A method for producing the fiber-reinforced molded article according to claim 8, the method for producing the fiber-reinforced molded article comprising a step of laminating a plurality of the fiber-reinforced epoxy resin composite sheets in a mold and press-molding the laminate at a temperature of 80 to 300°C and a pressure of 0.5 to 15 MPa.
